# EUROPÄISCHE PATENTSCHRIFT

(11) **EP 2 442 938 B1**
(45) Veröffentlichungstag und Bekanntmachung des Hinweises auf die Patenterteilung: **03.06.2020**
(21) Anmeldenummer: 10726411.1
(22) Anmeldetag: 14.06.2010
(51) Int. Cl.: B23K 9/09, B23K 9/095

(54) **VERFAHREN ZUM WECHSELN EINES SCHWEISSPROZESSES WÄHREND EINES SCHWEISSVERFAHRENS UND VERFAHREN ZUR WÄRMEEINBRINGUNG VOR EINEM SCHWEISSVERFAHREN**
METHOD FOR CHANGING A WELDING PROCESS DURING A WELDING OPERATION AND METHOD FOR APPLYING HEAT PRIOR TO A WELDING OPERATION
PROCÉDÉ DE CHANGEMENT D'UNE OPÉRATION DE SOUDAGE AU COURS D'UN PROCÉDÉ DE SOUDAGE, ET PROCÉDÉ D'APPORT DE CHALEUR AVANT SOUDAGE

(30) Priorität: 18.06.2009 AT 9462009
(43) Veröffentlichungstag der Anmeldung: 25.04.2012
(73) Patentinhaber: Fronius International GmbH, 4643 Pettenbach (AT)
(72) Erfinder: KAZMAIER, Jörg, A-4600 Thalheim bei WeIs (AT); ARTELSMAIR, Josef, A-4552 Wartberg/Krems (AT); BAUMANN, Willi, A-4142 Hofkirchen (AT); STIEGLBAUER, Walter, 4601 Manning (AT)
(74) Vertreter: Sonn & Partner Patentanwälte
(86) Internationale Anmeldenummer: PCT/AT2010/000213
(87) Internationale Veröffentlichungsnummer: WO 2010/144931

(56) Entgegenhaltungen:
- EP-A1- 1 726 395
- WO-A1-2006/089322
- JP-A- 57 187 175
- JP-A- 2005 313 179

## Beschreibung

Die Erfindung betrifft ein Verfahren zum Wechseln eines Schweißprozesses während eines Schweißverfahrens, wobei der Wechsel von einem durchgeführten Schweißprozess auf einen folgenden Schweißprozess während eines Kurzschlusses zwischen einem abschmelzenden Schweißdraht und einem Werkstück durchgeführt wird.

Des Weiteren betrifft die Erfindung auch ein Verfahren zur Wärmeeinbringung vor einem Schweißverfahren, wobei vor dem Beginn des Schweißverfahrens eine Startphase durchgeführt wird, in welcher mit einer einstellbaren Anzahl von Zyklen zumindest eines Schweißprozesses die Wärmeeinbringung in das Werkstück geregelt wird.

Die WO 2006/089322 beschreibt ein Verfahren zum Steuern und/oder Regeln eines Schweißgeräts bzw. einer Schweißstromquelle, mit welcher nach dem Zünden eines Lichtbogens ein Kalt-Metall-Transfer (Cold-Metal-Transfer, CMT)-Schweißprozess durchgeführt wird, bei dem der Schweißdraht bis zur Berührung mit dem Werkstück in Richtung Werkstück gefördert wird, anschließend nach Bildung eines Kurzschlusses, während einer Kurzschlussphase, die Drahtförderrichtung umgekehrt wird und der Schweißdraht bis zum Aufbrechen des Kurzschlusses vom Werkstück wegbewegt wird. Zur Steuerung der Wärmeeinbringung in das Werkstück bzw. der Einbringung von Zusatzwerkstoff ist vorgesehen, dass während zumindest einiger Kurzschlussphasen die Polarität des Schweißstroms und/oder der Schweißspannung umgeschaltet wird, wobei die Amplitude des Schweißstroms und/oder der Schweißspannung auf einen definierten Wert eingestellt wird, so dass ein Durchschmelzen des Schweißdrahts bzw. einer Kurzschlussbrücke unterbunden, jedoch eine sichere Wiederzündung des Lichtbogens beim Abheben des Schweißdrahts vom Werkstück ermöglicht wird. Somit wird zwischen einem "negativen CMT-Prozess" bzw. "Negativ-CMT-Prozess" und einem "positiven CMT-Prozess" bzw. "Positiv-CMT-Prozess" gewechselt.

Nachteilig ist hierbei, dass im Umpolvorgang keine Störeinflüsse berücksichtigt werden. So kann die Umpolung mit einem hohen Strom erfolgen, da die Dauer der Stromänderung aufgrund der aus der Länge des Schweißstromkreises resultierenden Induktivität nicht berücksichtigt wird. Dies führt insbesondere zu Instabilitäten im Kurzschluss. Des Weiteren können Schmelzbadbewegungen einen Aufbruch des Kurzschlusses während des Wechsels des Prozesses bewirken, so dass eine unkontrollierte Wärmeeinbringung erfolgt und Schweißspritzer entstehen. Ebenso wird beim Wechsel die Umpolrichtung nicht berücksichtigt. Insbesondere durch diese Störeinflüsse wird die Prozessstabilität verschlechtert.

Die EP 1 726 395 A1 offenbart ebenfalls ein Verfahren zum Wechseln eines Schweißprozesses während eines Schweißverfahrens der gegenständlichen Art, wobei die Umschaltung zwischen den beiden Betriebszuständen synchronisiert mit einem Zeitpunkt des Materialübergangs im aktuellen Betriebszustand erfolgt.

Aus der JP 57-187175 A ist ein Verfahren zur Wärmeeinbringung vor einem Schweißverfahren bekannt geworden.

Allgemein ist aus dem Stand der Technik auch ein so genannter "Hot-Start" bekannt, durch welchen vor einem Schweißprozess eine "Wärmeeinbringung" in das Werkstück erfolgt. Nachteilig ist hierbei, dass dieser "Hot-Start" mit einem Sprühlichtbogen durchgeführt wird. Dadurch erfolgt insbesondere bei zu überbrückenden Spalten zwischen zwei Dünnblechen eine zu hohe Wärmeeinbringung, so dass das Material schmilzt. Dies ist darauf zurückzuführen, dass ein Sprühlichtbogen einen hohen Strom benötigt, so dass im Wesentlichen nur die Dauer des Hot-Starts regelbar ist. Dementsprechend wird viel Energie bzw. Wärme in kurzer Zeit in das Werkstück eingebracht und es erfolgt keine an das Material angepasste Wärmeeinbringung.

Die Aufgabe der vorliegenden Erfindung besteht in der Schaffung oben genannter Verfahren, durch welche ein Schweißprozess mit hoher Prozessstabilität resultiert, welcher eine geringe und flexibel einstellbare Wärmeeinbringung bei gleichzeitig hoher Abschmelzleistung und wenig Verzug ermöglicht. Die Nachteile bekannter Verfahren sollen reduziert oder vermieden werden.

Die Aufgabe der Erfindung wird durch ein oben genanntes Verfahren zum Wechseln eines Schweißprozesses während eines Schweißverfahrens gelöst, dass mit dem Erkennen des Kurzschlusses des durchgeführten Schweißprozesses der Schweißdraht eine definierte Zeitdauer in der Förderrichtung weitergefördert wird und anschließend in Abhängigkeit eines Schwellwerts des Schweißstroms des folgenden Schweißprozesses gestoppt wird, worauf mit dem Erreichen des Schwellwerts des Schweißstroms der Schweißdraht zum Start des folgenden Schweißprozesses in die entgegengesetzte Richtung gefördert wird. Vorteilhaft ist hierbei, dass der Kurzschluss aufgrund von Schwankungen des Schmelzbades und der Tropfengröße über die Dauer des Wechsels des Schweißprozesses nicht aufgebrochen wird, indem der Schweißdraht nach dem Erkennen des Kurzschlusses tiefer in das Schmelzbad gefördert wird. Von Vorteil ist aber auch, dass der Wechsel unabhängig von der Länge des Schweißstromkreises ist, da die Dauer der Stromänderung aufgrund der Induktivität berücksichtigt wird und somit die hohe Prozessstabilität durch den Wechsel nicht unterbrochen wird. Unter dem Begriff Schweißstromkreis wird der durch die Stromquelle, Leitungen und dem Werkstück gebildete Stromkreis verstanden. Des Weiteren ist von Vorteil, dass ein sicherer Wechsel des Schweißprozesses im Kurzschluss gewährleistet wird, da die Einleitung zum Wechsel auf den folgenden Schweißprozess bzw. zum Aufbrechen des Kurzschlusses erst dann erfolgt, wenn die Stromänderung durchgeführt wurde. Somit wird der Kurzschluss zumindest über die Dauer der Stromänderung aufrechterhalten. Ebenso ist vorteilhaft, dass insbesondere im Dünnblechbereich größere Spalte mit höherer Prozessstabilität überbrückt werden können, als dies aus dem Stand der Technik bekannt ist. Dies deshalb, da bei gleich bleibendem geringen Wärmeeintrag eine höhere Abschmelzleistung bzw. bei gleich bleibender Abschmelzleistung ein noch geringerer Wärmeeintrag als beim bekannten CMT-Prozess erzielt wird. So kann auch beispielsweise ein Spalt mit einem Schweißverfahren überbrückt werden, dessen Breite kontinuierlich steigt bzw. sinkt. Weiters resultiert eine flexible Einstellung der Wärmeeinbringung bzw. Abschmelzleistung aufgrund der unterschiedlichen Schweißprozesse.

Der Wechsel des Schweißprozesses wird vorteilhafterweise mit dem Erreichen eines Schwellwerts des Schweißstroms des durchgeführten Schweißprozesses durchgeführt. Dadurch wird der Wechsel der Polarität mit wenig Leistung durchgeführt, da der Wechsel bei dem definierten Schwellwert durchgeführt wird. Somit kann eine kostengünstigere Hardware verwendet werden.

Von Vorteil ist auch, dass zwischen zwei gegengleich gepolten Schweißprozessen gewechselt wird, da dadurch die große zu durchlaufende Stromdifferenz in Abhängigkeit der Induktivität des Schweißstromkreises im Kurzschluss erfolgt, da der Kurzschluss während dieser Zeit aufrecht erhalten bleibt. In vorteilhafter Weise wird auch ein Wechsel des Schweißprozesses und der Polarität durchgeführt, wobei dies in einem sicheren Kurzschluss durchgeführt wird.

In vorteilhafter Weise wird durch die Maßnahme, dass der Schwellwert des Schweißstroms und die Zeitdauer in Abhängigkeit einer Kennlinie für den Schweißprozess hinterlegt werden, erreicht, dass die Werte der Parameter für den Anwender automatisch eingestellt sind.

Die Aufgabe der Erfindung wird durch ein oben genanntes Verfahren zum Wechseln eines Schweißprozesses während eines Schweißverfahrens gelöst, wobei zwischen einem Kurzschlussschweißprozess und einem Pulsschweißprozesses jeweils in einer Wechselphase gewechselt wird, in welcher Wechselphase das Ende des Schweißdrahts, die Wärmeeinbringung und/oder die Lichtbogenlänge in Abhängigkeit des durchgeführten Schweißprozesses für den folgenden Schweißprozess angepasst wird, wobei beim Wechsel des Kurzschlussschweißprozesses zum Pulsschweißprozess ein Umpolvorgang mit einem Wechsel der Polarität des Schweißstromes und danach eine erste Wechselphase durchgeführt wird, in welcher ersten Wechselphase am Ende des Schweißdrahts ein Tropfen gebildet wird und eine gewünschte Lichtbogenlänge für den nachfolgenden Pulsschweißprozess eingestellt wird, und beim Wechsel des Pulsschweißprozesses zum Kurzschlussschweißprozess eine zweite Wechselphase und danach ein weiterer Umpolvorgang mit einem Wechsel der Polarität des Schweißstromes durchgeführt wird, wobei in der zweiten Wechselphase der Schweißdraht ins Schmelzbad gefördert wird und die zweite Wechselphase mit einem Kurzschluss beendet wird. Dadurch erfolgt ein optimales Vorbereiten des Drahtendes (Tropfengröße, Temperaturverlauf sowie Lichtbogenlänge) auf den nachfolgenden Schweißprozess, um eine hohe Prozessstabilität zu gewährleisten. Von Vorteil ist auch, dass im Wesentlichen immer ein Tropfen am Drahtende vorhanden ist und somit das Drahtende nie abkühlt. Der Tropfen wird dabei mittels eines Strom-Zeitprofils gebildet, welches vom durchgeführten und vom folgenden Schweißprozess abhängig ist. Entsprechend wird mit dem Strom-Zeitprofil auch die Wärmeeinbringung geregelt. Der Schweißdraht wird in der Wechselphase in Abhängigkeit des folgenden Schweißprozesses positioniert, wodurch ein Einstellen der richtigen Lichtbogenlänge für den Pulsschweißprozess sowie das Herstellen eines Kurzschlusses für den Kurzschlussschweißprozess erreicht werden kann. Die Wechselphase wird jeweils mit einem Umpolvorgang kombiniert, sodass ein gleichzeitiger Prozesswechsel und Polaritätswechsel möglich ist.

Durch die Maßnahme, dass in der ersten Wechselphase nach dem Umpolvorgang am Ende des Schweißdrahts ein Tropfen gebildet wird, welcher mit dem unmittelbar nach der ersten Wechselphase folgenden Puls des Pulsschweißprozesses abgelöst wird, wird in vorteilhafter Weise erreicht, dass die sogenannte Grundstromphase des ersten Zyklus in der ersten Wechselphase stattfindet, wodurch ein schneller Wechsel möglich ist. Auch ist eine von Anfang an hohe Prozessstabilität von Vorteil.

Wird nach einem Wechsel auf den Pulsschweißprozess zumindest ein Parameter des Pulsschweißprozesses von einem Startwert auf den Endwert verändert kann durch eine je nach Bedarf gezielte Anpassung der Pulsparameter im darauf folgenden Pulsschweißprozess dem veränderten Temperaturprofil des Drahtendes entgegen gewirkt werden, um den Gleichgewichtszustand der Energie wieder herzustellen

Beispielsweise kommen der Schweißstrom, die Pulsweite, die Pulsfrequenz oder die Drahtvorschubgeschwindigkeit des Pulsschweißprozesses in Frage.

In der zweiten Wechselphase vor dem Umpolvorgang kann die Vorschubgeschwindigkeit des Schweißdrahts zur Bildung eines Kurzschlusses für den Kurzschlussschweißprozess verändert werden und der Schweißstrom zur Bildung eines Tropfens angepasst werden, wodurch das Ende des Schweißdrahts für den Kurzschlussschweißprozess angepasst und ein Kurzschluss gebildet wird, so dass der Umpolvorgang erfolgen kann.

Die Aufgabe der Erfindung wird auch durch ein oben genanntes Verfahren zur Wärmeeinbringung vor einem Schweißverfahren gelöst, bei dem beim Wechsel zwischen Zyklen unterschiedlicher Schweißprozesse ein oben genanntes Verfahren zum Wechseln eines Schweißprozesses durchgeführt wird. Vorteilhaft ist hierbei, dass das Material vor dem Schweißprozess optimal vorgewärmt ist, da über die Anzahl der Zyklen die Wärmeeinbringung exakt geregelt werden kann bzw. die Wärmeeinbringung exakt auf das Material abgestimmt werden kann. Somit wird wenig Energie bzw. Wärme über längere Zeit in das Werkstück eingebracht.

Dabei können Zyklen unterschiedlicher Polarität oder unterschiedlicher Schweißprozesse verwendet werden.

Weitere sich hieraus ergebenden Vorteile können ebenso aus den bereits beschriebenen Vorteilen entnommen werden.

Die vorliegende Erfindung wird anhand der beigefügten, schematischen Zeichnungen näher erläutert, wobei die in der gesamten Beschreibung enthaltenen Offenbarungen sinngemäß auf gleiche Teile mit gleichen Bezugszeichen übertragen werden können. Weiters können auch Einzelmerkmale aus dem gezeigten Ausführungsbeispiel bzw. aus den gezeigten Ausführungsbeispielen für sich eigenständige, erfindungsgemäße Lösungen darstellen. Darin zeigen:
- Fig. 1: eine schematische Darstellung eines Schweißgeräts;
- Fig. 2: einen schematischen zeitlichen Verlauf des Schweißstroms und der Fördergeschwindigkeit des Schweißdrahts bei einem Schweißverfahren mit einem Kurzschlussschweißprozess und einem Pulsschweißprozess mit den erfindungsgemäßen Wech-selphasen und Umpolvorgängen, wobei die Pulsweite während des Pulsschweißprozesses verändert wird;
- Fig. 3: einen schematischen zeitlichen Verlauf des Schweißstroms und der Fördergeschwindigkeit des Schweißdrahts bei einem Schweißverfahren mit zwei Kurzschlussschweißprozessen mit den erfindungsgemäßen Umpolvorgängen;
- Fig. 4a: und 4b schematische zeitliche Verläufe des Schweißstroms und der Fördergeschwindigkeit des Schweißdrahts beim Umpolvorgang im Detail;
- Fig. 5: einen schematischen zeitlichen Verlauf des Schweißstroms und der Fördergeschwindigkeit des Schweißdrahts bei einem Schweißverfahren mit einem Kurzschlussschweißprozess und einem Pulsschweißprozess mit den erfindungsgemäßen Wechselphasen und Umpolvorgängen, wobei die Schweißstromhöhe während des Pulsschweißprozesses verändert wird;
- Fig. 6: einen schematischen zeitlichen Verlauf des Schweißstroms und der Fördergeschwindigkeit des Schweißdrahts bei einem Schweißverfahren mit einem Kurzschlussschweißprozess und einem Pulsschweißprozess mit den erfindungsgemäßen Wechselphasen und Umpolvorgängen, wobei die Pulsfrequenz während des Pulsschweißprozesses verändert wird;
- Fig. 7: einen schematischen zeitlichen Verlauf des Schweißstroms und der Fördergeschwindigkeit des Schweißdrahts bei einem Schweißverfahren mit einem Kurzschlussschweißprozess und einem Pulsschweißprozess mit den erfindungsgemäßen Wechselphasen und Umpolvorgängen, wobei die Fördergeschwindigkeit während des Pulsschweißprozesses verändert wird;
- Fig. 8: einen schematischen zeitlichen Verlauf des Schweißstroms eines Schweißverfahrens mit der erfindungsgemäßen Startphase; und
- Fig. 9: einen weiteren schematischen zeitlichen Verlauf des Schweißstroms eines Schweißverfahrens mit der erfindungsgemäßen Startphase.

Einführend wird festgehalten, dass gleiche Teile des Ausführungsbeispiels mit gleichen Bezugszeichen versehen werden.

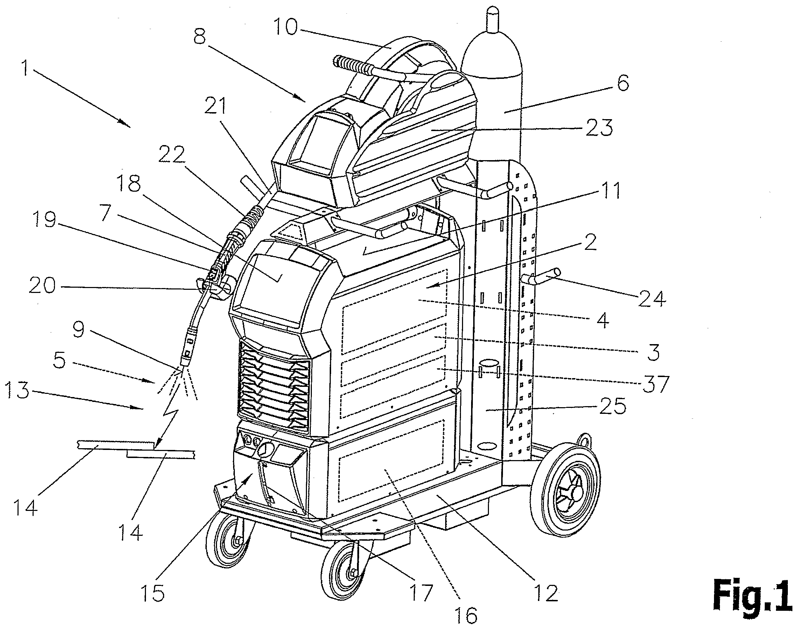

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt. Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventilen, usw. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergleichen, zwischen einem Gasspeicher 6 und einem Schweißbrenner 7 bzw. einem Brenner angeordnet ist.

Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich ist es möglich, dass das Drahtvorschubgerät 8, wie es aus dem Stand der Technik bekannt ist, im Schweißgerät 1, insbesondere im Gehäuse 11 der Stromquelle 2, integriert ist und nicht, wie in Fig. 1 dargestellt, als Zusatzgerät auf einem Fahrwagen 12 positioniert ist. Hierbei wird von einem so genannten kompakten Schweißgerät 1 gesprochen. Dabei ist es auch möglich, dass das Drahtvorschubgerät 8 direkt auf das Schweißgerät 2 aufgesetzt werden kann, d.h., dass das Gehäuse 11 der Stromquelle 2 auf der Oberseite zur Aufnahme des Drahtvorschubgeräts 8 ausgebildet ist, so dass der Fahrwagen 12 entfallen kann. Es ist auch möglich, dass das Drahtvorschubgerät 8 den Schweißdraht 9 bzw. den Zusatzwerkstoff außerhalb des Schweißbrenners 7 an die Prozessstelle zuführt, wobei hierzu im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem bevorzugt aus einem oder mehreren Teilen gebildeten Werkstück 14 wird über eine Schweißleitung, nicht dargestellt, vom Leistungsteil 3 der Stromquelle 2, dem Schweißbrenner 7, insbesondere der Elektrode bzw. dem Schweißdraht 9, zugeführt, wobei das zu verschweißende Werkstück 14 über eine weitere Schweißleitung für das weitere Potential, insbesondere das Masse-Kabel, mit der Stromquelle 2, nicht dargestellt, verbunden ist und somit über den Lichtbogen 13 bzw. den gebildeten Plasmastrahl für einen Prozess ein Stromkreis aufgebaut werden kann. Bei Verwendung eines Brenners mit internen Lichtbogen 13 sind die beiden Schweißleitungen, nicht dargestellt, zum Brenner geführt, so dass im Brenner ein entsprechender Stromkreis aufgebaut werden kann, wie dies bei Plasma-Brennern der Fall sein kann.

Zum Kühlen des Schweißbrenners 7 kann über ein Kühlgerät 15 der Schweißbrenner 7 unter Zwischenschaltung ev. Komponenten, wie beispielsweise einen Strömungswächter, mit einem Flüssigkeitsbehälter, insbesondere einem Wasserbehälter 16 mit einer Füllstandsanzeige 17, verbunden werden, wodurch bei der Inbetriebnahme des Schweißbrenners 7 des Kühlgeräts 15, insbesondere eine für die im Wasserbehälter 16 angeordnete Flüssigkeit verwendete Flüssigkeitspumpe, gestartet wird und somit eine Kühlung des Schweißbrenners 7 bewirkt werden kann. Wie bei dem dargestellten Ausführungsbeispiel gezeigt, wird das Kühlgerät 15 auf den Fahrwagen 12 positioniert, auf das anschließend die Stromquelle 2 gestellt wird. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, so dass sie sicher aufeinander gestapelt bzw. aufeinander gestellt werden können.

Das Schweißgerät 1, insbesondere die Stromquelle 2, weist weiters eine Ein- und/oder Ausgabevorrichtung 18 auf, über die die unterschiedlichsten Schweißparameter, Betriebsarten oder Schweißprogramme des Schweißgeräts 1 eingestellt bzw. aufgerufen und angezeigt werden können. Dabei werden die über die Ein- und/oder Ausgabevorrichtung 18 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgeräts 1 angesteuert bzw. entsprechende Sollwerte für die Regelung oder Steuerung vorgegeben. Hierbei ist es auch möglich, dass bei Verwendung eines entsprechenden Schweißbrenners 7 auch Einstellvorgänge über den Schweißbrenner 7 vorgenommen werden können, wobei dazu der Schweißbrenner 7 mit einer Schweißbrenner-Ein- und/oder Ausgabevorrichtung 18 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden. Zum Starten des Schweißprozesses weist der Schweißbrenner 7 meist einen Startschalter, nicht dargestellt, auf, so dass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird.

Weiters ist in dem dargestellten Ausführungsbeispiel der Schweißbrenner 7 über ein Schlauchpaket 21 mit dem Schweißgerät 1 bzw. der Schweißanlage verbunden, wobei das Schlauchpaket 21 über einen Knickschutz 22 am Schweißbrenner 7 befestigt ist. In dem Schlauchpaket 21 sind die einzelnen Leitungen, wie beispielsweise die Versorgungsleitung bzw. Leitungen für den Schweißdraht 9, für das Gas 5, für den Kühlkreislauf, für die Datenübertragung, usw., vom Schweißgerät 1 zum Schweißbrenner 7 angeordnet, wogegen das Masse-Kabel bevorzugt extra an der Stromquelle 2 angeschlossen wird. Das Schlauchpaket 21 wird über eine Kupplungsvorrichtung, nicht dargestellt, an der Stromquelle 2 oder dem Drahtvorschubgerät 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpakets 21 gewährleistet ist, kann das Schlauchpaket 21 über eine Zugentlastungsvorrichtung, nicht dargestellt, mit dem Gehäuse 11 der Stromquelle 2 oder dem Drahtvorschubgerät 8 verbunden sein.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 7 als luftgekühlter Schweißbrenner 7 ausgeführt werden kann, so dass beispielsweise das Kühlgerät 15 entfallen kann. Man kann also sagen, dass das Schweißgerät 1 zumindest durch die Stromquelle 2, dem Drahtvorschubgerät 8 und das Kühlgerät 15 gebildet wird, wobei dieses auch in einem gemeinsamen Gehäuse 11 angeordnet sein kann. Weiters ist es möglich, dass noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6, usw. angeordnet bzw. eingesetzt werden können. Schweißgeräte 1, welche zum so genannten Wechselstromschweißen ausgebildet sind, haben des Weiteren ein Wechselrichtermodul 37. Dieses ermöglicht dementsprechend den Wechsel der Polarität des Schweißstroms I. Das Wechselrichtermodul 37 kann dabei im Gehäuse 11 integriert sein oder aber auch ein eigenes Gehäuse aufweisen. Dieses wird dann bevorzugt zwischen dem Kühlgerät 15 und dem Gehäuse 11 angeordnet.

Ein derartiges Schweißgerät 1 ist entsprechend auch zur Durchführung unterschiedlicher Schweißprozesse ausgebildet. Somit können auch zumindest zwei Schweißprozesse während eines Schweißverfahrens kombiniert werden. Beispielsweise derart, dass sich ein Schweißprozess mit positiver Polarität und ein Schweißprozess mit negativer Polarität periodisch abwechseln, wobei zumindest ein Zyklus jedes Schweißprozesses durchgeführt wird. Dabei erfolgt der Wechsel des Schweißprozesses in einem Kurzschluss.

Erfindungsgemäß ist nun vorgesehen, dass der Schweißdraht 9 gezielt in das Schmelzbad eingetaucht wird, das Ende des Schweißdrahts 9 in einer Wechselphase 30 angepasst wird, zumindest ein Parameter des Pulsschweißprozesses 26 von einem Startwert auf den Endwert verändert wird und/oder vor dem Schweißprozess eine Startphase 31 durchgeführt wird. Somit können die Anforderungen einer geringen Wärmeeinbringung bei gleichzeitig hoher Abschmelzleistung im Dünnblechbereich erfüllt werden. Dazu wird der Wechsel des Schweißprozesses mit der reversierenden Bewegung des Schweißdrahts 9 kombiniert.

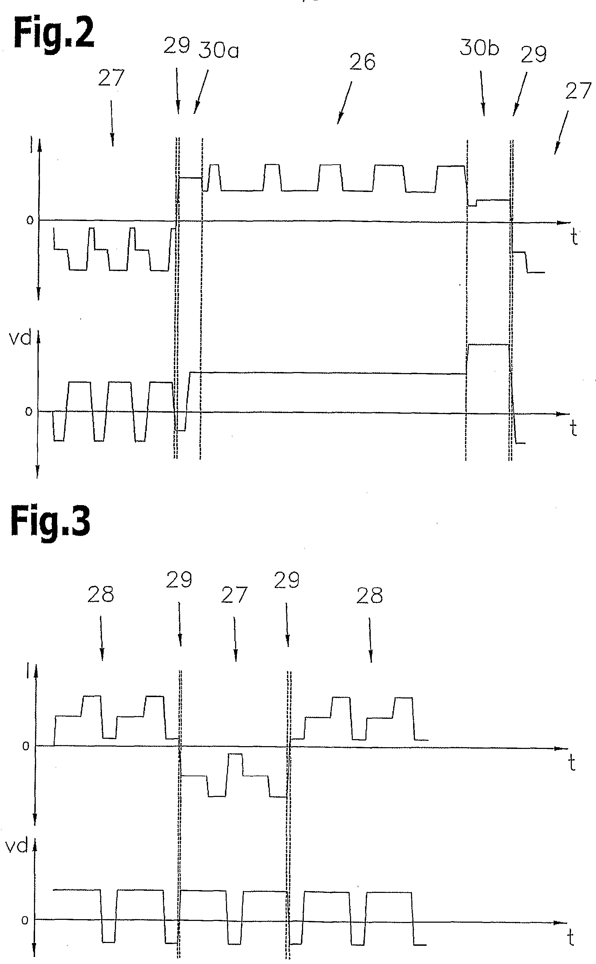

Im Folgenden ist die Erfindung anhand der Zusammenschau der Fig. 2 bis 9 beschrieben.

Zum Überblick sind in den Fig. 2 und 3 zwei Prozessvarianten dargestellt, in welchen die Erfindung bzw. zumindest ein Teil der Einzelerfindungen angewendet wird. In Fig. 2 ist die Kombination eines Pulsschweißprozesses 26 bzw. eines Sprühlichtbogen-Schweißprozesses mit einem Negativ-CMT-Prozess 27 (Kurzschlussschweißprozess) dargestellt, wobei in Fig. 3 die Kombination eines Positiv-CMT-Prozesses 28 (Kurzschlussschweißprozess) mit dem Negativ-CMT-Prozess 27 - also zwei Kurzschlussschweißprozesse - dargestellt ist. Grundsätzlich weisen hierbei der Pulsschweißprozess 26 und der Positiv-CMT-Prozess 28 eine positive Polarität auf, wobei der Negativ-CMT-Prozess 27 eine negative Polarität des Schweißstroms I aufweist. Erfolgt entsprechend ein Wechsel der Polarität, wird die Polarität des Schweißdrahts 9 gewechselt. Dabei ist die positive Polarität für den Wärmeeintrag in das Werkstück 14 verantwortlich, wobei zusätzlich eine Reinigungswirkung des Lichtbogens 13 auf der Oberfläche des Werkstücks 14 erfolgt. Ebenso treten so genannte Pinchkräfte auf, welche beispielsweise im Pulsschweißprozess 26 die Ablösung des Tropfens bewirken. Hingegen ist die negative Polarität für die Höhe der Abschmelzleistung im Verhältnis zur Wärmeeinbringung verantwortlich. Die Größe des Tropfens am Ende des Schweißdrahts 9 kann dadurch wesentlich gesteigert werden, da aufgrund der geringen Stromliniendichte im Wesentlichen keine Pinchkräfte auftreten, welche den Tropfen automatisch ablösen würden.

Gemäß Fig. 2 wechseln sich also der Pulsschweißprozess 26 und der Negativ-CMT-Prozess 27 bevorzugt periodisch ab, wobei ein Abschnitt des Verlaufs des Schweißstroms I und der Fördergeschwindigkeit vd des Schweißdrahts 9 dargestellt ist. Demzufolge erfolgt jeweils ein Wechsel des Schweißprozesses und der Polarität im Kurzschluss. Damit dies mit einer ausreichend hohen Prozessstabilität und der erforderlichen Wärmeeinbringung durchgeführt werden kann, erfolgt der Wechsel in einem Umpolvorgang 29 und einer Wechselphase 30. Dies insbesondere auch deshalb, weil sowohl der Schweißprozess - zwischen Puls und Kurzschluss - als auch die Polarität gewechselt wird. Beim Umpolvorgang 29 wird bevorzugt der Schweißdraht 9 gezielt in das Schmelzbad eingetaucht, wobei in der Wechselphase 30 das Ende des Schweißdrahts 9 angepasst wird. Gegebenenfalls kann auch ein Parameter des Pulsschweißprozesses 26 von einem Startwert auf den Endwert verändert werden und vor dem Schweißprozess eine Startphase 31 durchgeführt werden.

Gemäß Fig. 3 wechseln sich der Positiv-CMT-Prozess 28 und der Negativ-CMT-Prozess 27 bevorzugt periodisch ab, wobei ein Abschnitt des Verlaufs des Schweißstroms I und der Fördergeschwindigkeit vd des Schweißdrahts 9 daraus dargestellt ist. Somit findet wiederum sowohl ein Wechsel des Schweißprozesses als auch der Polarität statt. Hierbei ist allerdings keine Wechselphase 30 erforderlich, da zwischen zwei Kurzschlussschweißprozessen unterschiedlicher Polarität gewechselt wird. Ebenso wird beim Wechsel im Umpolvorgang 29 der Schweißdraht 9 gezielt in das Schmelzbad eingetaucht und/oder die Förderung des Schweißdrahts 9 gestoppt. Gegebenenfalls kann auch vor dem Schweißprozess eine Startphase 31 durchgeführt werden.

Grundsätzlich kann zu Fig. 2 und 3 gesagt werden, dass die dafür erforderlichen Einstellungen im Schweißgerät 1 hinterlegt sind. Das heißt, wenn der Schweißer eine so genannte Kennlinie auswählt und einen Arbeitspunkt darauf einstellt, die erfindungsgemäßen Verfahren automatisch durchgeführt werden. Selbstverständlich kann der Schweißer auch die Anzahl der Zyklen jedes einzelnen Schweißprozesses an die Anwendung anpassen, damit die erforderliche Wärmeeinbringung flexibel einzustellen ist. Entsprechend wird auch gemäß den Diagrammen die Richtung der Fördergeschwindigkeit vd des Schweißdrahts 9 bei einem Kurzschluss geändert, indem dieser zurück - also vom Werkstück 14 weg - gefördert wird.

Nachfolgend werden die Einzelteile der Erfindung im Detail beschrieben. Auf die einzelnen Schweißprozesse wird nicht im Detail eingegangen, da diese aus dem Stand der Technik bekannt sind.

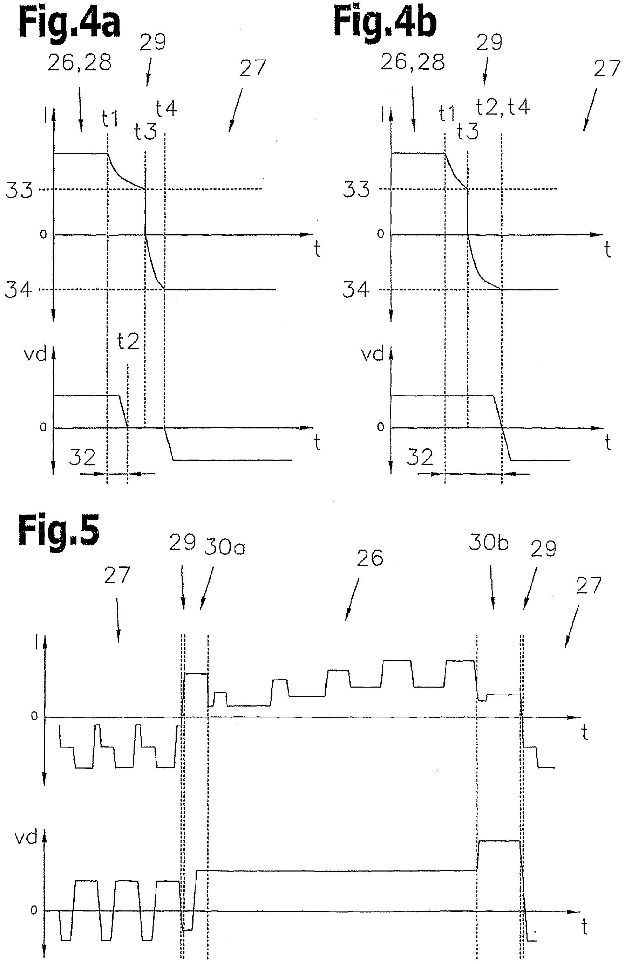

Aus Fig. 4a und Fig. 4b ist ersichtlich, wie der Umpolvorgang 29 bzw. der Wechsel der Polarität im Detail durchgeführt wird. Bis zum Zeitpunkt t1 wird ein aus dem Stand der Technik bekannter Schweißprozess mit einer positiven Polarität - wie ein Positiv-CMT-Prozess 28 oder ein Pulsschweißprozesses 26 - durchgeführt, wobei zum Zeitpunkt t1 ein Kurzschluss zwischen dem Schweißdraht 9 und dem Werkstück 14 erkannt wird. Gemäß der Erfindung wird ab diesem Zeitpunkt t1 der Schweißdraht 9 eine definierte Zeitdauer 32 (beispielsweise im Bereich bis etwa 1 ms) weitergefördert, so dass dieser tiefer in das Schmelzbad eingetaucht wird. Dies erfolgt beispielsweise mit einer Fördergeschwindigkeit vd im Bereich von etwa 20 m/min bis 40 m/min. Das heißt, dass das Ende des Schweißdrahts 9, an welchem der Tropfen hängt, eine definierte Länge in das Schweißbad eingetaucht wird. Entsprechend wird dabei das Material des Werkstücks 14 unter dem Schmelzbad nicht berührt, so dass es zu keinem so genannten Stottern kommt und die Prozessstabilität gewährleistet ist. Entsprechend ist in dieser Zeitdauer 32 die Verzögerung berücksichtigt, welche durch den Motor des Vorschubs für den Schweißdraht 9 bedingt ist. Demnach entspricht der waagrechte Verlauf innerhalb der Zeitdauer 32 der Weiterförderung und der Abfall der Fördergeschwindigkeit vd der Verzögerung. Somit ist gewährleistet, dass die Förderung des Schweißdrahts 9 zum Zeitpunkt t2 - also nach Ablauf der Zeitdauer 32 - gestoppt ist. Das heißt aber auch, dass für den Umpolvorgang 29 der Kurzschluss sicher gegeben ist. Im Umpolvorgang 29 muss sich entsprechend die Polarität des Schweißstroms I ändern. Wie dargestellt, wird von einer positiven Polarität auf eine negative Polarität - wie ein Negativ-CMT-Prozess 27 - umgepolt. Die Geschwindigkeit dieser Stromänderung wird dabei durch die aus der variablen Länge des Schweißstromkreises resultierenden Induktivität beeinflusst. Demnach dauert der Umpolvorgang 29 unterschiedlich lange. So wird zwischen dem Zeitpunkt t1 und dem Zeitpunkt t3 im Kurzschluss der Schweißstrom I bis auf einen Schwellwert 33 gesenkt. Dieser Schwellwert 33 (beispielsweise im Bereich von etwa 30 A bis 170 A) ist entsprechend derart definiert, dass mit der Hardware des so genannten Wechselrichtermoduls 37 ein Wechsel der Polarität durchgeführt werden kann. Ist demnach der Schweißstrom I zum Zeitpunkt t1 über dem Schwellwert 33, muss der Schweißstrom I auf den Schwellwert 33 gesenkt werden, wie zum Zeitpunkt t3 ersichtlich. Die Dauer für diese Senkung ist entsprechend von der Induktivität des Schweißstromkreises abhängig. Somit führt im Wesentlichen das Wechselrichtermodul 37 den Wechsel der Polarität zum Zeitpunkt t3 durch. Nachdem also die Polarität gewechselt wurde, steigt der Strom I zwischen dem Zeitpunkt t3 und dem Zeitpunkt t4 in Abhängigkeit der Induktivität des Schweißstromkreises bis zu einem Schwellwert 34. Demzufolge bleibt die Fördergeschwindigkeit vd des Schweißdrahts 9 gemäß Fig. 4a zwischen dem Zeitpunkt t3 und dem Zeitpunkt t4 gestoppt, so dass der Kurzschluss bestehen bleibt. Dieser Schwellwert 34 (beispielsweise im Bereich von etwa -120 A) ist derart in Abhängigkeit der Kennlinie definiert, dass das Ende des Schweißdrahts 9 entsprechend vorerwärmt ist und eine Einleitung zum Aufbruch des Kurzschlusses möglich ist. Dies ist insbesondere vom Leistungsbereich des folgenden Schweißprozesses und vom Material des Werkstücks 14 abhängig. Somit wird gemäß Fig. 4a das Erreichen des Schwellwerts 34 abgewartet, bis der Aufbruch des Kurzschlusses mit einer Rückwärtsbewegung des Schweißdrahts 9 eingeleitet wird. Anschließend wird der folgende Schweißprozess mit dem Aufbruch des Kurzschlusses gestartet. Das heißt, dass der Aufbruch des Kurzschlusses erst nach dem Umpolvorgang 29 eingeleitet werden darf - also wenn die Polarität gewechselt wurde bzw. die Stromänderung durchgeführt ist - wie dies zum Zeitpunkt t4 der Fall ist. Somit wird während des Umpolvorgangs 29 vom Zeitpunkt t1 bis zum Zeitpunkt t4 ein Kurzschluss sichergestellt. Gemäß Fig. 4a derart, dass der Schweißdraht 9 zwischen dem Zeitpunkt t1 und dem Zeitpunkt t2 gezielt in das Schmelzbad eingetaucht wird und die Förderung des Schweißdrahts 9 zwischen dem Zeitpunkt t2 bis zum Zeitpunkt t4 gestoppt wird. Zum Zeitpunkt t4 wird entsprechend der Aufbruch des Kurzschlusses eingeleitet, indem der Schweißdraht 9 zurück - also vom Werkstück 14 weg - gefördert wird und entsprechend danach ein Lichtbogen 13 gezündet wird. Somit kann der nach dem Umpolvorgang 29 vorgesehene bzw. folgende Schweißprozess durchgeführt werden.

Gemäß Fig. 4a wird die Förderung des Schweißdrahts 9 zwischen dem Zeitpunkt t2 bis zum Zeitpunkt t4 gestoppt. Dies ist entsprechend nicht erforderlich, wenn sich der Zeitpunkt t2 mit dem Zeitpunkt t4 gemäß Fig. 4b überschneidet. In diesem Fall wird die Förderrichtung des Schweißdrahts 9 umgekehrt, ohne diese über einen längeren Zeitraum zu stoppen. Es kann aber auch gesagt werden, dass zum Zeitpunkt t2 überprüft wird, ob der Schwellwert 33 und der Schwellwert 34 erreicht bzw. unterschritten wurde. Ist dies der Fall, wird zum Zeitpunkt t2 im Wesentlichen die Förderichtung umgekehrt (Fig. 4b). Ist dies nicht der Fall, wird die Förderung des Schweißdrahts 9 gestoppt und das Erreichen der Schwellwerte 33 und 34 abgewartet (Fig. 4a). Zusammenfassend kann also gesagt werden, dass der Schweißdraht 9 in Abhängigkeit des Schwellwerts 34 gestoppt wird. Also entweder bis zum Erreichen des Schwellwerts 34 oder zur Umkehrung der Förderrichtung des Schweißdrahts 9.

Zwischen dem Zeitpunkt t1 und dem Zeitpunkt t2 wird gemäß der Erfindung sowie gemäß Fig. 4a und Fig. 4b der Schweißdraht 9 in das Schmelzbad eingetaucht. Entsprechend resultiert aus der Zeitdauer zwischen diesen Zeitpunkten und der Fördergeschwindigkeit vd die Tiefe, wie weit der Schweißdraht eingetaucht wird. Die Eintauchtiefe ist dabei insbesondere vom Material und von der Materialdicke des Werkstücks 14, der erforderlichen bzw. gewünschten Schweißraupe, von der Viskosität des Schmelzbades sowie von der Polarität und dem Leistungsbereich des Schweißprozesses (davon sind insbesondere die Schmelzbadschwingungen abhängig), welcher vor dem Umpolvorgang 29 durchgeführt wurde, abhängig. Somit wird die Eintauchtiefe entsprechend mit der Kennlinie abgestimmt und ist an die Anwendung angepasst. Die Polarität hat dabei einen Einfluss auf die Größe des Tropfens am Ende des Schweißdrahts 9. Beim Eintauchen wird dieser Tropfen aufgrund der Oberflächenspannung abgelöst und der Kurzschluss darf nicht aufbrechen, so dass ein optimaler Umpolvorgang 29 durchgeführt werden kann. Demzufolge wird die Eintauchtiefe im Wesentlichen an den vor dem Umpolvorgang 29 durchgeführten Schweißprozess angepasst.
Der Ablauf des Umpolvorgangs 29 kann aber auch eingesetzt werden, wenn im Kurzschluss nur der Schweißprozess gewechselt wird - also die Polarität gleich bleibt. Dabei wird im Wesentlichen der Schweißdraht 9 tiefer in das Schmelzbad eingetaucht und/oder die Förderung des Schweißdrahts 9 gestoppt, so dass beim Wechsel des Schweißprozesses ein sicherer Kurzschluss gewährleistet ist. Beispielsweise kann dies bei einem Wechsel zwischen dem Pulsschweißprozess 26 und dem Positiv-CMT-Prozess 28 angewendet werden. Selbstverständlich kann dieser Umpolvorgang 29 auch in umgekehrter Richtung angewandt werden.

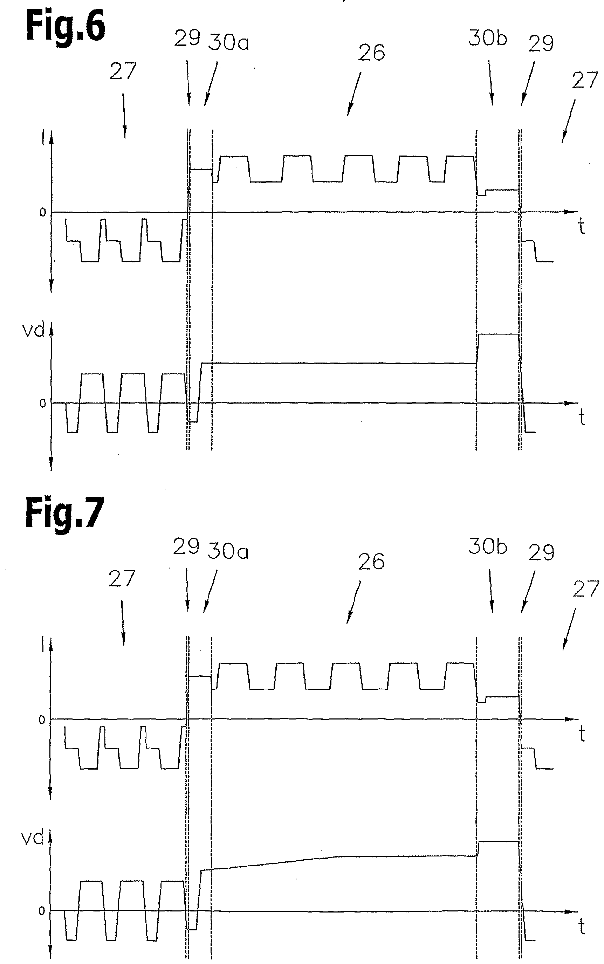

Anhand der Fig. 2 und 5 bis 7 wird nun im Detail die Wechselphase 30 sowie die Änderung eines Parameters des Pulsschweißprozesses 26 von einem Startwert auf den Endwert beschrieben. Die Wechselphase 30 dient dabei im Wesentlichen zur Kombination des Pulsschweißprozesses 26 mit einem Kurzschlussschweißprozess wie dem Negativ-CMT-Prozess 27 bzw. dem Positiv-CMT-Prozess 28.
Die Wechselphase 30 wird entsprechend mit dem Umpolvorgang 29 gekoppelt, so dass im Umpolvorgang 29 der Schweißdraht 9 gezielt in das Schmelzbad eingetaucht wird und/oder die Förderung des Schweißdrahts 9 gegebenenfalls gestoppt und in der Wechselphase 30 das Ende des Schweißdrahts 9 angepasst wird. Für die Beschreibung des Stoppens der Förderung des Schweißdrahts 9 und das Eintauchen des Schweißdrahts 9 in das Schmelzbad wird auf die Beschreibung zu den Fig. 4a und 4b verwiesen. Die Anpassung des Endes des Schweißdrahts 9 ist erforderlich, da sowohl der Schweißprozess - zwischen Puls und Kurzschluss - als auch die Polarität gewechselt wird. Insbesondere erfolgt eine Anpassung des Tropfens am Ende des Schweißdrahts 9, der Wärmeeinbringung und/oder der Lichtbogenlänge. Da der Schweißprozess im Wesentlichen periodisch gewechselt wird, sind zwei Wechselphasen 30 erforderlich, in denen die erforderliche Anpassung in Abhängigkeit des durchgeführten Schweißprozesses und des folgenden Schweißprozesses durchgeführt wird. Somit entkoppeln die Wechselphasen 30 im Wesentlichen auch den Pulsschweißprozess 26 vom Kurzschlussschweißprozess. Eine erste Wechselphase 30a ist nach dem Umpolvorgang vom Kurzschlussschweißprozess auf den Pulsschweißprozess 26 erforderlich. Diese erste Wechselphase 30a beginnt im Wesentlichen mit dem Zeitpunkt t4 des Umpolvorgangs 29, also mit einem Lichtbogen 13. Eine zweite Wechselphase 30b ist vor dem Umpolvorgang 29 vom Pulsschweißprozess 26 auf den Kurzschlussschweißprozess erforderlich. Dabei wird entsprechend am Ende der zweiten Wechselphase 30b ein Kurzschluss eingeleitet, wobei mit dem Kurzschluss der Umpolvorgang 29 gestartet wird.
Gemäß Fig. 2 erfolgt also in der ersten Wechselphase 30a der Wechsel vom Negativ-CMT-Prözess 27 auf den Pulsschweißprozess 26. Beim Negativ-CMT-Prozess 27 umschließt der Lichtbogen 13 sehr stark das Drahtende, so dass sich dieses stark erwärmt. Würde nun im Kurzschluss ein Wechsel auf den Pulsschweißprozess 26 erfolgen - ohne Wechselphase 30, steht anfänglich wesentlich mehr Energie zur kurzschlussfreien Ablöse des Tropfens zur Verfügung, als erforderlich ist. Dadurch werden mit dem Tropfen so genannte Schweißspritzer abgelöst. Um dies zu verhindern, erfolgt nach dem Umpolvorgang 29 die erste Wechselphase 30a. Diese beinhaltet im Wesentlichen einen Strompuls, welcher aus dem stark erwärmten Drahtende aus dem Negativ-CMT-Prozess 27 einen Tropfen bildet. Zusätzlich wird in dieser Wechselphase 30a der Schweißdraht 9 soweit aus dem Schmelzbad gefördert bzw. positioniert, dass die Lichtbogenlänge für den Pulsschweißprozess 26 eingestellt ist. Für diese Anpassung ist entsprechend eine Zeitdauer für die Wechselphase 30 erforderlich, welche sich beispielsweise im Bereich von etwa 1 ms bis 15 ms bewegt. Dementsprechend ist auch die Stromhöhe des Strompulses an diese Zeitdauer angepasst, so dass der Tropfen mit der erforderlichen Größe gebildet wird. Die Stromhöhe bewegt sich dabei beispielsweise in einem Bereich von etwa 20 A bis 170 A, wobei beispielsweise die Zyklen des Pulsschweißprozesses 26 mit einer Frequenz bis etwa 500 Hz wiederholt werden und die Stromhöhe der Pulse im Bereich von etwa 200 A bis 300 A liegt. Dieser Tropfen wird im Wesentlichen mit dem Puls des Pulsschweißprozesses 26 abgelöst, welcher unmittelbar nach der ersten Wechselphase 30a folgt. Somit ersetzt im Wesentlichen die erste Wechselphase 30a die Grundstromphase des ersten Zyklus des Pulsschweißprozesses 26. Sollte die Zeitdauer der ersten Wechselphase 30a für eine Anpassung der Temperatur nicht ausreichen, kann-gegebenenfalls auch zumindest ein Parameter des Pulsschweißprozesses 26 von einem niedrigeren Startwert auf den höheren Endwert verändert werden. Das heißt, dass in den folgenden Zyklen nach der Wechselphase 30 eine stufenweise Anpassung - ausgehend von einem Startwert - der Pulsweite der Pulse (Fig. 2), der Stromhöhe der Pulse und/oder des Grundstroms (Fig. 5), der Frequenz der Pulse (Fig. 6) und/oder eine kontinuierliche bzw. stufenweise Anpassung der Fördergeschwindigkeit vd (Fig. 7) des Schweißdrahts 9 erfolgt, bis der entsprechende Endwert erreicht ist. Demnach wird die Wärmeeinbringung stufenweise erhöht.

In der zweiten Wechselphase 30b erfolgt der Wechsel vom Pulsschweißprozess 26 auf den Negativ-CMT-Prozess 27. Beim Pulsschweißprozess 26 wird insbesondere eine bestimmte Stromhöhe des Pulses und Pulsweite benötigt, um in Abhängigkeit der Frequenz der Pulse eine optimale Tropfenablöse mittels Pincheffekt zu erreichen. Dafür ist es unter anderem auch wichtig, dass die Fördergeschwindigkeit vd des Schweißdrahts 9, der Durchmesser des Schweißdrahts 9, das Schutzgas 5 und/oder die Lichtbogenlänge aufeinander abgestimmt sind. Entsprechend resultiert daraus, dass das Drahtende eine bestimmte Temperatur aufweist, welche für den Pulsschweißprozess 26 optimal ist. Erfolgt nun nach einer definierten Anzahl von Zyklen bzw. Schrittweite des Pulsschweißprozesses 26 ein Wechsel auf den Negativ-CMT-Prozess 27, ist eine für diesen Schweißprozess abgestimmte Temperatur erforderlich. Diese ist entsprechend niedriger als beim Pulsschweißprozess 26 und wird in der zweiten Wechselphase 30b eingestellt, welche vor dem Umpolvorgang 29 stattfindet. In dieser zweiten Wechselphase 30b wird entsprechend mit einem Strompuls ein Tropfen gebildet, welcher durch einen Kurzschluss im Schmelzbad abgelöst wird. Damit ein Kurzschluss erreicht wird, wird entsprechend in der zweiten Wechselphase 30b zusätzlich die Fördergeschwindigkeit vd des Schweißdrahts 9 - beispielsweise im Bereich bis 20 m/min - verändert. Wie dargestellt, wird diese beispielsweise erhöht, wobei die Veränderung - also Erhöhen oder Verringern - vom Leistungsbereich des durchgeführten Pulsschweißprozesses 26 abhängig ist. Somit kann mit Eintritt des Kurzschlusses die zweite Wechselphase 30b beendet und der Umpolvorgang 29 gemäß den Fig. 4a und 4b durchgeführt werden. Ebenso benötigt die zweite Wechselphase 30b eine gewisse Zeit, in welcher die Temperatur des Schweißdrahts 9, die Fördergeschwindigkeit, usw. für den Negativ-CMT-Prozess 27 angepasst werden.

Grundsätzlich wird beim Wechsel des Schweißprozesses das Schweißverfahren durch die Umpolvorgänge 29 und/oder die Wechselphasen 30 nicht unterbrochen, da diese stets mit einem Kurzschluss gekoppelt sind. Somit stellt sich im Wesentlichen während des Schweißverfahrens im Mittel eine konstante Wärmeeinbringung bei einer konstant hohen Abschmelzleistung ein.

Im Wesentlichen gilt das beschriebene auch für den periodischen Wechsel zwischen dem Positiv-CMT-Prozess 28 und dem Pulsschweißprozess 26. Der wesentliche Unterschied liegt darin, dass nach der ersten Wechselphase 30a - also beim Wechsel vom Positiv-CMT-Prozess 28 auf den Pulsschweißprozess 26 - zumindest ein Parameter des Pulsschweißprozesses von einem höheren Startwert auf den niedrigeren Endwert verändert wird. Demzufolge erfolgt eine Reduzierung der Wärmeeinbringung.

Gemäß der Erfindung wird während des Schweißprozesses eine geringe Wärmeeinbringung bei gleichzeitig hoher Abschmelzleistung des Schweißdrahts 9 erreicht. Dazu muss die Vorraussetzung einer so genannten vorlaufenden Wärmezone erfüllt sein, so dass im Wesentlichen das Material, wie beispielsweise Aluminium und dessen Legierungen, vorgewärmt ist. Dies ist insbesondere zu Beginn des Schweißprozesses von Bedeutung, da zuvor kein Schweißprozess durchgeführt wurde und somit auch keine Wärmeeinbringung in das Material bzw. das Werkstück 14 stattgefunden hat. Die Wärmeeinbringung zu Beginn des Schweißprozesses ist insbesondere vom Material und von einem zu überbrückenden Spalt abhängig, so dass eine einstellbare Wärmeeinbringung erforderlich ist. Gelöst wird dies erfindungsgemäß derart, dass in einer Startphase 31 vor dem Schweißprozess die Wärmeeinbringung geregelt wird. Dazu kann die Anzahl der Zyklen flexibel eingestellt werden. Die Zyklen entsprechen dabei bevorzugt den Zyklen eines Pulsschweißprozesses 26, eines Negativ-CMT-Prozesses 27 und/oder eines Positiv-CM-T-Prozesses 28, welche entsprechend auch während des Schweißprozesses kombiniert werden. Somit kann in der Startphase 31 durch Einstellung des Verhältnisses zwischen positiven und negativen Zyklen die Wärmeeinbringung geregelt werden. Grundsätzlich ist aber das Verhältnis der Zyklen unabhängig vom Verhältnis der Zyklen im Schweißprozess. Entsprechend wird durch einen Zyklus positiver Polarität (Positiv-CMT-Prozess 28 und/oder Pulsschweißprozess 26) mehr Wärme eingebracht, als durch einen Zyklus negativer Polarität (Negativ-CMT-Prozess 27). Somit ist auch zu Beginn des Schweißprozesses die erforderliche Wärmezone vorhanden, so dass ein optimaler Schweißprozess durchgeführt werden kann.

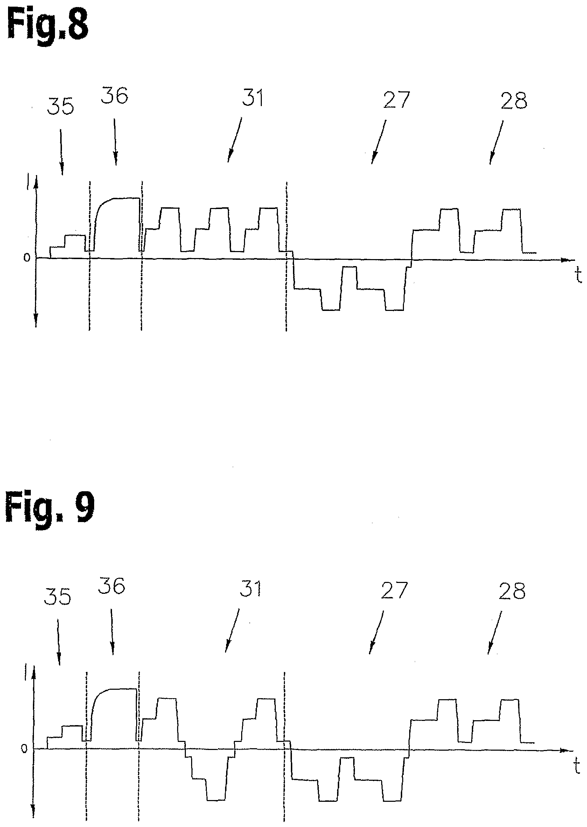

In den Fig. 8 und 9 sind Beispiele für die Startphase 31 dargestellt. Hieraus ist ersichtlich, dass in einer Zündphase 35 zuerst der Lichtbogen 13 gezündet wird, in einer anschließenden so genannten Hotstart-Phase 36 durch einen Sprühlichtbogen dem Werkstück schnell Wärme eingebracht wird, wobei in der folgenden Startphase 31 die Wärmeeinbringung an den Schweißprozess angepasst wird. Somit wird mit der Startphase 31 die Wärmeeinbringung kontrolliert erhöht, so dass kein Material des Werkstücks 14 weg geschmolzen wird und ein optimales Schweißergebnis resultiert. Die Startphase 31 kann dabei aus einer definierten Anzahl positiver Zyklen bestehen (Fig. 8) oder abwechselnd aus positiven und negativen Zyklen (Fig. 9) bestehen. Bevorzugt sollte die Startphase 31 mit einem Zyklus beendet werden, welcher eine gegengleiche Polarität zum ersten Zyklus des Schweißprozesses aufweist. Somit ist im Wesentlichen eine konstante Wärmeeinbringung gegeben. Die Definition der Startphase 31 wird beispielsweise vom Schweißer an der Bedienfront des Schweißgeräts 1 eingestellt. Ebenso kann über die Bedienfront ausgewählt werden, ob die Hotstart-Phase 36 durchgeführt wird. Entsprechend wird die Hotstart-Phase 36 nur eingestellt, wenn dies aufgrund des zu verschweißenden Werkstücks 14 erforderlich ist. Nachdem die definierte Anzahl von Zyklen in der Startphase 31 ausgeführt wurde, wird entsprechend der Schweißprozess durchgeführt.

Zur Durchführung eines Schweißverfahrens wählt der Benutzer bevorzugt eine Kennlinie aus, in welcher die erfindungsgemäßen Verfahren hinterlegt sind. Entsprechend sind sämtliche Parameter der Kennlinie an die Anwendung und deren Leistungsbereich angepasst. Selbstverständlich ist es dem Benutzer aber auch möglich, die erfindungsgemäßen Verfahren selbst einzustellen oder die hinterlegten Parameter dazu zu verändern. Ebenso ist es dem Benutzer auch möglich, eine Anzahl von Zyklen einzustellen. So werden beispielsweise zehn Zyklen für die Startphase 31 verwendet und sechzig Zyklen für die Schweißprozesse. Gemäß der Anwendung werden entsprechend die Schweißprozesse automatisch ausgewählt, so dass insbesondere die erforderliche Wärmeeinbringung und Abschmelzleistung erzielt wird.

## Patentansprüche

1. Verfahren zum Wechseln eines Schweißprozesses während eines Schweißverfahrens, wobei der Wechsel von einem durchgeführten Schweißprozess auf einen folgenden Schweißprozess während eines Kurzschlusses zwischen einem abschmelzenden Schweißdraht (9) und einem Werkstück (14) durchgeführt wird, **dadurch gekennzeichnet, dass** mit dem Erkennen des Kurzschlusses des durchgeführten Schweißprozesses der Schweißdraht (9) eine definierte Zeitdauer (32) in der Förderrichtung weitergefördert wird und anschließend in Abhängigkeit eines Schwellwerts (34) des Schweißstroms (I) des folgenden Schweißprozesses gestoppt wird, worauf mit dem Erreichen des Schwellwerts (34) des Schweißstroms (I) der Schweißdraht (9) zum Start des folgenden Schweißprozesses in die entgegengesetzte Richtung gefördert wird.

2. Verfahren nach Anspruch 1, **dadurch gekennzeichnet, dass** mit dem Erreichen eines Schwellwerts (33) des Schweißstroms (I) des durchgeführten Schweißprozesses der Wechsel durchgeführt wird.

3. Verfahren nach Anspruch 1 oder 2, **dadurch gekennzeichnet, dass** der Wechsel zwischen zwei gegengleich gepolten Schweißprozessen durchgeführt wird.

4. Verfahren nach einem der Ansprüche 1 bis 3, **dadurch gekennzeichnet, dass** der Schwellwert (34) des Schweißstroms (I) und die Zeitdauer (32) in Abhängigkeit einer Kennlinie für den Schweißprozess hinterlegt werden.

5. Verfahren zum Wechseln eines Schweißprozesses während eines Schweißverfahrens, wobei der Wechsel von einem durchgeführten Schweißprozess auf einen folgenden Schweißprozess während eines Kurzschlusses zwischen einem abschmelzenden Schweißdraht (9) und einem Werkstück (14) durchgeführt wird, **dadurch gekennzeichnet, dass** zwischen einem Kurzschlussschweißprozess und einem Pulsschweißprozess (26) jeweils in einer Wechselphase (30) gewechselt wird, in welcher Wechselphase (30) das Ende des Schweißdrahts (9), die Wärmeeinbringung und/oder die Lichtbogenlänge in Abhängigkeit des durchgeführten Schweißprozesses für den folgenden Schweißprozess angepasst wird, wobei beim Wechsel des Kurzschlussschweißprozesses zum Pulsschweißprozess (26) ein Umpolvorgang (29) mit einem Wechsel der Polarität des Schweißstromes (I) und danach eine erste Wechselphase (30a) durchgeführt wird, in welcher ersten Wechselphase (30a) am Ende des Schweißdrahts (9) ein Tropfen gebildet wird und eine gewünschte Lichtbogenlänge für den nachfolgenden Pulsschweißprozess (26) eingestellt wird, und beim Wechsel des Pulsschweißprozesses (26) zum Kurzschlussschweißprozess eine zweite Wechselphase (30b) und danach ein weiterer Umpolvorgang (29) mit einem Wechsel der Polarität des Schweißstromes (I) durchgeführt wird, wobei in der zweiten Wechselphase (30b) der Schweißdraht (9) ins Schmelzbad gefördert wird und die zweite Wechselphase (30b) mit einem Kurzschluss beendet wird.

6. Verfahren nach Anspruch 5, **dadurch gekennzeichnet, dass** in der ersten Wechselphase (30a) nach dem Umpolvorgang (29) am Ende des Schweißdrahts (9) ein Tropfen gebildet wird, welcher mit dem unmittelbar nach der ersten Wechselphase (30a) folgenden Puls des Pulsschweißprozesses (26) abgelöst wird.

7. Verfahren nach Anspruch 5 oder 6, **dadurch gekennzeichnet, dass** nach einem Wechsel auf den Pulsschweißprozess (26) zumindest ein Parameter des Pulsschweißprozesses (26) von einem Startwert auf den Endwert verändert wird.

8. Verfahren nach Anspruch 7, **dadurch gekennzeichnet, dass** ein Schweißstrom (I) als Parameter des Pulsschweißprozesses (26) pro Puls stufenweise verändert wird.

9. Verfahren nach Anspruch 7 oder 8, **dadurch gekennzeichnet, dass** eine Pulsweite als Parameter des Pulsschweißprozesses (26) pro Puls stufenweise verändert wird.

10. Verfahren nach einem der Ansprüche 7 bis 9, **dadurch gekennzeichnet, dass** eine Pulsfrequenz als Parameter des Pulsschweißprozesses (26) pro Puls stufenweise verändert wird.

11. Verfahren nach einem der Ansprüche 7 bis 10, **dadurch gekennzeichnet, dass** eine Drahtvorschubgeschwindigkeit (v_{d}) des Pulsschweißprozesses (26) pro Puls zumindest in einem Bereich kontinuierlich verändert wird.

12. Verfahren nach einem der Ansprüche 5 bis 11, **dadurch gekennzeichnet, dass** in der zweiten Wechselphase (30b) vor dem Umpolvorgang (29) die Vorschubgeschwindigkeit des Schweißdrahts (9) zur Bildung eines Kurzschlusses für den Kurzschlussschweißprozess verändert wird und der Schweißstrom (I) zur Bildung eines Tropfens angepasst wird.

13. Verfahren zur Wärmeeinbringung vor einem Schweißverfahren, wobei vor dem Beginn des Schweißverfahrens eine Startphase (31) durchgeführt wird, in welcher mit einer einstellbaren Anzahl von Zyklen zumindest eines Schweißprozesses die Wärmeeinbringung in das Werkstück (14) geregelt wird, und beim Wechsel zwischen Zyklen unterschiedlicher Schweißprozesse ein Verfahren gemäß Anspruch 1 durchgeführt wird.

14. Verfahren nach Anspruch 13, **dadurch gekennzeichnet, dass** Zyklen unterschiedlicher Polarität verwendet werden.

15. Verfahren nach Anspruch 13 oder 14, **dadurch gekennzeichnet, dass** Zyklen unterschiedlicher Schweißprozesse verwendet werden.

## Claims

1. Method for changing a welding process during a welding operation, the change being carried out from a welding process that has been carried out to a subsequent welding process during a short circuit between a melting welding wire (9) and a workpiece (14), **characterised in that**, upon detecting the short circuit of the welding process that has been carried out, the welding wire (9) is still moved for a defined duration (32) in the movement direction and is then stopped, depending on a threshold value (34) of the welding current (I) of the subsequent welding process, whereupon the welding wire (9) is moved in the opposite direction in order to start the subsequent welding process upon reaching the threshold value (34) of the welding current (I).

2. Method according to claim 1, **characterised in that** the change is carried out upon reaching a threshold value (33) of the welding current (I) of the welding process that has been carried out.

3. Method according to either claim 1 or claim 2, **characterised in that** the change is carried out between two welding processes having opposite polarities.

4. Method according to any of claims 1 to 3, **characterised in that** the threshold value (34) of the welding current (I) and the duration (32) are stored for the welding process depending on a characteristic curve.

5. Method for changing a welding process during a welding operation, the change being carried out from a welding process that has been carried out to a subsequent welding process during a short circuit between a melting welding wire (9) and a workpiece (14), **characterised in that** the change is made between a short circuit welding process and a pulse welding process (26) in each case in a changing phase (30), in which changing phase (30) the end of the welding wire (9), the heat application and/or the arc length is adapted for the subsequent welding process depending on the welding process that has been carried out, when changing the short circuit welding process to the pulse welding process (26), a polarity reversal procedure (29) with a change in the polarity of the welding current (I) and then a first changing phase (30a) being carried out, in which first changing phase (30a) a droplet is formed at the end of the welding wire (9) and a desired arc length is set for the subsequent pulse welding process (26), and when changing the pulse welding process (26) to the short circuit welding process, a second changing phase (30b) and then a further polarity reversal procedure (29) with a change in the polarity of the welding current (I) being carried out, in the second changing phase (30b) the welding wire (9) being moved into the weld pool and the second changing phase (30b) being ended by a short circuit.

6. Method according to claim 5, **characterised in that** in, in the first changing phase (30a) after the polarity reversal procedure (29), a droplet is formed at the end of the welding wire (9), which droplet is detached by the pulse of the pulse welding process (26) immediately following the first changing phase (30a).

7. Method according to either claim 5 or claim 6, **characterised in that**, after a change to the pulse welding process (26), at least one parameter of the pulse welding process (26) is changed from a start value to the end value.

8. Method according to claim 7, **characterised in that** a welding current (I) is changed incrementally per pulse as a parameter of the pulse welding process (26).

9. Method according to either claim 7 or claim 8, **characterised in that** a pulse width is changed incrementally per pulse as a parameter of the pulse welding process (26).

10. Method according to any of claims 7 to 9, **characterised in that** a pulse frequency is changed incrementally per pulse as a parameter of the pulse welding process (26).

11. Method according to any of claims 7 to 10, **characterised in that** a wire feeding speed (v_{d}) of the pulse welding process (26) is changed continuously per pulse at least in a range.

12. Method according to any of claims 5 to 11, **characterised in that**, in the second changing phase (30b) prior to the polarity reversal procedure (29), the feeding speed of the welding wire (9) is changed in order to create a short circuit for the short circuit welding process and the welding current (I) is adapted in order to form a droplet.

13. Method for applying heat prior to a welding operation, wherein prior to the start of the welding operation a starting phase (31) is carried out, in which the heat application into the workpiece (14) is regulated by an adjustable number of cycles of at least one welding process, and, when changing between cycles of different welding processes, a method according to claim 1 is carried out.

14. Method according to claim 13, **characterised in that** cycles of different polarities are used.

15. Method according to either claim 13 or claim 14, **characterised in that** cycles of different welding processes are used.

## Revendications

1. Procédé de changement de processus de soudure pendant un procédé de soudure, dans lequel le changement est effectué d'un processus de soudure exécuté vers un processus de soudure suivant pendant un court-circuit entre un fil de soudure en fusion (9) et une pièce (14), **caractérisé en ce que**, avec la détection du court-circuit du processus de soudure exécuté, le fil de soudure (9) continue d'être convoyé pendant une durée définie (32) dans la direction de convoyage puis, en fonction d'une valeur seuil (34) du courant de soudure (I) du processus de soudure suivant et le fil de soudure (9) est alors convoyé au début du processus de soudure suivant dans la direction opposée lorsque la valeur seuil (34) du courant de soudure (I) est atteinte.

2. Procédé selon la revendication 1, **caractérisé en ce que** le changement est effectué lorsqu'une valeur seuil (33) du courant de soudure (I) du processus de soudure exécuté est atteinte.

3. Procédé selon la revendication 1 ou 2, **caractérisé en ce que** le changement est effectué entre deux processus de soudure polarisés de manière diamétralement opposée.

4. Procédé selon l'une des revendications 1 à 3, **caractérisé en ce que** la valeur seuil (34) du courant de soudure (I) et la durée (32) sont enregistrées en fonction d'une courbe caractéristique pour le processus de soudure.

5. Procédé de changement de processus de soudure pendant un procédé de soudure, dans lequel le changement est effectué d'un processus de soudure exécuté vers un processus de soudure suivant pendant un court-circuit entre un fil de soudure en fusion (9) et une pièce (14), **caractérisé en ce que**, entre un processus de soudure par court-circuit et un processus de soudure par impulsions (26), on passe à une phase de changement (30), moyennant quoi, dans cette phase de changement (30), l'extrémité du fil de soudure (9), l'apport de chaleur et/ou la longueur de l'arc électrique sont adaptés en fonction du processus de soudure exécuté pour le processus de soudure suivant, dans lequel, pour le changement du processus de soudure par court-circuit vers le processus de soudure par impulsions (26), un processus de changement de polarisation (29) est effectué avec un changement de polarité du courant de soudure (I) puis une première phase de changement (30a) est exécutée, moyennant quoi, dans cette première phase de changement (30a), une goutte est formée à l'extrémité du fil de soudure (9) et une longueur d'arc de cercle souhaitée pour le processus de soudure par impulsions (26) suivant est réglée et, lors du changement du processus de soudure par impulsions (26) vers le processus de soudure par court-circuit, une deuxième phase de changement (30b) puis un autre processus de changement de polarisation (29) avec un changement de polarité du courant de soudure (I) sont exécutés, dans lequel, dans la deuxième phase de changement (30b), le fil de soudure (9) est convoyé vers le bain de fusion et la deuxième phase de changement (30b) est terminée par un court-circuit.

6. Procédé selon la revendication 5, **caractérisé en ce que**, dans la première phase de changement (30a) après le processus de changement de polarisation (29), une goutte est formée à l'extrémité du fil de soudure (9), qui est détachée avec l'impulsion du processus de soudure (26) qui suit immédiatement la première phase de changement (30a).

7. Procédé selon la revendication 5 ou 6, **caractérisé en ce que**, après un changement vers le processus de soudure par impulsions (26), au moins un paramètre du processus de soudure par impulsions (26) est modifié d'une valeur initiale vers la valeur finale.

8. Procédé selon la revendication 7, **caractérisé en ce qu'**un courant de soudure (I) est modifié par étapes à chaque impulsion en tant que paramètre du processus de soudure par impulsions (26).

9. Procédé selon la revendication 7 ou 8, **caractérisé en ce qu'**une largeur d'impulsion est modifiée par étapes à chaque impulsion en tant que paramètre du processus de soudure par impulsions (26).

10. Procédé selon l'une des revendications 7 à 9, **caractérisé en ce qu'**une fréquence d'impulsion est modifiée par étapes à chaque impulsion en tant que paramètre du processus de soudure par impulsions (26).

11. Procédé selon l'une des revendications 7 à 10, **caractérisé en ce qu'**une vitesse d'avance du fil (v_{d}) du processus de soudure par impulsions (26) est modifiée de manière continue au moins dans un intervalle.

12. Procédé selon l'une des revendications 5 à 11, **caractérisé en ce que**, dans la deuxième phase de changement (30b), avant le processus de changement de polarisation (29), la vitesse d'avance du fil de soudure (9) est modifiée pour la formation d'un court-circuit pour le processus de soudure par court-circuit et le courant de soudure (I) est adapté pour la formation d'une goutte.

13. Procédé d'apport de chaleur avant un procédé de soudure, dans lequel, avant le début du procédé de soudure, une phase de démarrage (31) est exécutée, dans laquelle, avec un nombre réglable de cycles d'au moins un processus de soudure, l'apport de chaleur dans la pièce (14) est régulé et, dans lors du changement entre les cycles de différents processus de soudure, un procédé selon la revendication 1 est exécuté.

14. Procédé selon la revendication 13, **caractérisé en ce que** des cycles de polarités différentes sont utilisés.

15. Procédé selon la revendication 13 ou 14, **caractérisé en ce que** des cycles de différents processus de soudure sont utilisés.
